# EUROPEAN PATENT APPLICATION

(11) **EP 4 717 389 A1**
(43) Date of publication of application: **01.04.2026**
(21) Application number: 23938456.3
(22) Date of filing: 23.05.2023
(51) Int. Cl.: B23H 1/10, B23H 7/36

(54) **LIQUID FILTRATION DEVICE AND PROCESSING SYSTEM**

(71) Applicant: FANUC CORPORATION, Oshino-mura Minamitsuru-gun Yamanashi 401-0597 (JP)
(72) Inventor: KASAI, Hirotsugu, Minamitsuru-gun, Yamanashi 401-0597 (JP); MAKINO, Yoshinori, Minamitsuru-gun, Yamanashi 401-0597 (JP)
(74) Representative: Schmidt, Steffen J.
(86) International application number: PCT/JP2023/019143
(87) International publication number: WO 2024/241488

(57) **Abstract**

The present disclosure pertains to a liquid filtration device comprising: a dirty-liquid tank that stores a dirty liquid, which is a liquid that contains metal waste generated by processing of a metal workpiece; a filter that filters the dirty liquid; and a supernatant liquid tank that stores a supernatant liquid, which is a liquid that has passed through the filter. The liquid filtration device comprises: an adjustment mechanism that adjusts the specific resistance value of a liquid; a first sensor that detects the specific resistance value of the liquid; a determination unit that determines whether the specific resistance value has increased; and a mechanism control unit that, when it is determined that the specific resistance value has increased, causes the adjustment mechanism to adjust the specific resistance value of the liquid.

## Description

### TECHNICAL FIELD

The present disclosure relates to a liquid filtration device and a processing system.

### BACKGROUND ART

JP 2021-167052 A discloses an electrical discharge machine including a dirty fluid tank, a filter, and a clean fluid tank. The dirty fluid tank stores a working fluid containing machining chips. The working fluid stored in the dirty fluid tank is sent to the clean fluid tank via the filter. The filter filters the working fluid.

### SUMMARY OF THE INVENTION

The filter has a lifetime (product lifetime). There has been a demand for a liquid filtration device and a processing system that are capable of extending the life of a filter.

An aspect of the present disclosure is characterized by a liquid filtration device comprising: a dirty liquid tank configured to store a dirty liquid that is a liquid containing metal chips generated by machining of a metal workpiece; a filter configured to filter the dirty liquid; a clean liquid tank configured to store a clean liquid that is the liquid that has passed through the filter; an adjustment mechanism configured to adjust a resistivity value of the liquid; a first sensor configured to detect the resistivity value of the liquid; a determination unit configured to determine whether or not the resistivity value has increased, based on the resistivity value detected by the first sensor; and a mechanism control unit configured to cause the adjustment mechanism to adjust the resistivity value of the liquid in a case where the resistivity value is determined to have increased.

Another aspect of the present disclosure is characterized by a processing system comprising: the liquid filtration device described above; and a processing machine configured to machine the metal workpiece.

### BRIEF DESCRIPTION OF DRAWINGS

[FIG. 1] FIG. 1 is a schematic diagram of a processing system;
[FIG. 2] FIG. 2 is a schematic diagram of a controller according to a first embodiment;
[FIG. 3] FIG. 3A is a graph for explaining the determination of a resistivity value according to the first embodiment, and FIG. 3B is a graph for explaining the determination of a pressure value according to the first embodiment;
[FIG. 4] FIG. 4 is a schematic diagram of a controller according to a second embodiment;
[FIG. 5] FIG. 5A is a graph for explaining the determination of a resistivity value according to the second embodiment, and FIG. 5B is a graph for explaining the determination of a pressure value according to the second embodiment;
[FIG. 6] FIG. 6A is a graph for explaining the determination of a resistivity value according to a third embodiment, and FIG. 6B is a graph for explaining the determination of a pressure value according to the third embodiment;
[FIG. 7] FIG. 7 is a schematic diagram of a controller according to a fourth embodiment;
[FIG. 8] FIG. 8A is a graph for explaining the determination of a resistivity value according to the fourth embodiment, and FIG. 8B is a graph for explaining the determination of a pressure value according to the fourth embodiment;
[FIG. 9] FIG. 9A is a graph for explaining the determination of a resistivity value according to a fifth embodiment, and FIG. 9B is a graph for explaining the determination of a pressure value according to the fifth embodiment;
[FIG. 10] FIG. 10 is a schematic diagram of a controller according to a first modification; and
[FIG. 11] FIG. 11 is a schematic diagram of a processing system according to a second modification.

### DETAILED DESCRIPTION OF THE INVENTION

In the case where a filter is clogged with metal chips generated by the machining of a metal workpiece, an operator needs to replace the filter. The used filter is usually discarded without being reused. In order to reduce the number of times of replacement of the filter and reduce the amount of discarded filters, it is required to increase the life of the filter.

An object of the technique of the present disclosure is to provide a liquid filtration device and a processing system that are capable of extending the life of a filter.

In the present disclosure, a term "resistivity value" is used. It is generally known that the reciprocal of resistivity [Ωm] is electrical conductivity [S/m]. Therefore, the term "resistivity value" can be replaced with the term "electrical conductivity". In the case where the term "resistivity value" is replaced with the term "electrical conductivity", "lowering the resistivity value" is replaced with "increasing the electrical conductivity". Conversely, "increasing the resistivity value" is replaced with "lowering the electrical conductivity".

### [First Embodiment]

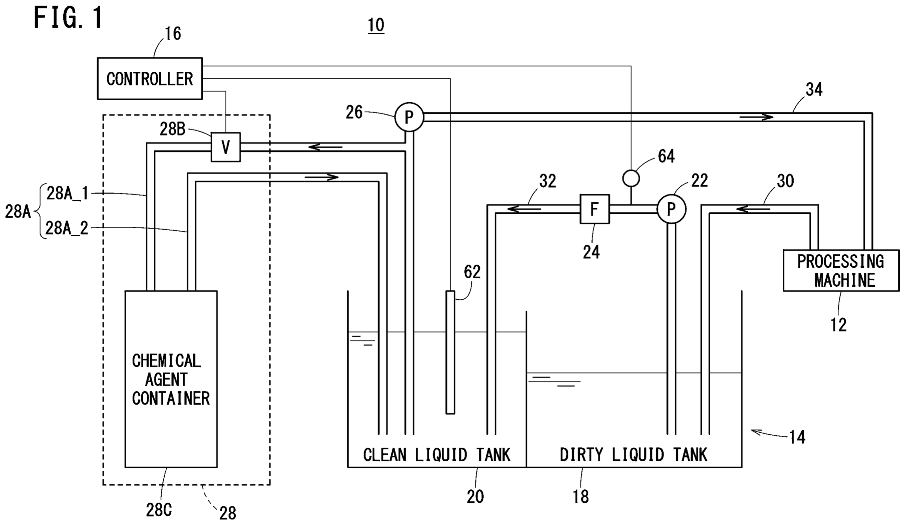

FIG. 1 is a schematic diagram of a processing system 10. The processing system 10 includes a processing machine 12, a liquid filtration device 14, and a controller 16. The processing machine 12 is a machine that machines a metal workpiece, which is a workpiece made of a metal material. The processing machine 12 may be an electrical discharge machine that performs electrical discharge machining on a metal workpiece in a working fluid. The working fluid is a liquid used for machining metal workpieces.

The liquid filtration device 14 includes a dirty liquid (fluid) tank 18, a clean liquid (fluid) tank 20, a first pump 22, a filter 24, a second pump 26, and an adjustment mechanism 28.

The working fluid that has been used during the machining by the processing machine 12 is discharged from the processing machine 12 to the dirty liquid tank 18 through a drainage path 30. Sludge is mixed in the working fluid discharged from the processing machine 12. Metal chips generated by machining of a metal workpiece is contained in the sludge.

The working fluid stored in the dirty liquid tank 18 is sent to the clean liquid tank 20 through a filtration path 32. The filtration path 32 is provided with the first pump 22 and the filter 24. The first pump 22 pumps up the working fluid in the dirty liquid tank 18 and sends the working fluid to the clean liquid tank 20. The filter 24 filters the working fluid sent from the dirty liquid tank 18 to the clean liquid tank 20, and removes sludge such as metal chips from the working fluid.

The working fluid stored in the clean liquid tank 20 is sent from the clean liquid tank 20 to the processing machine 12 through a supply path 34. The supply path 34 is provided with the second pump 26. The second pump 26 pumps up the working fluid in the clean liquid tank 20 and sends the working fluid to the processing machine 12.

The adjustment mechanism 28 is a mechanism that adjusts the resistivity value of the clean liquid stored in the clean liquid tank 20. In the present embodiment, the adjustment mechanism 28 causes the working fluid to pass through a container accommodating a chemical agent for lowering the resistivity value. For example, the adjustment mechanism 28 may be constituted by a circulation path 28A, a valve 28B, and a chemical agent container 28C.

The circulation path 28A includes a forward path 28A_1 and a return path 28A_2. The forward path 28A_1 allows communication between a portion of the supply path 34 that is located upstream of the second pump 26 and the chemical agent container 28C. The return path 28A_2 allows communication between the chemical agent container 28C and the clean liquid tank 20. The forward path 28A_1 is provided with the valve 28B. In the case where the valve 28B is opened, part of the working fluid stored in the clean liquid tank 20 circulates between the clean liquid tank 20 and the chemical agent container 28C. The valve 28B may be provided on the return path 28A_2.

The chemical agent container 28C is a container in which a chemical agent for lowering the resistivity value of the working fluid is accommodated, and communicates with the forward path 28A_1 and the return path 28A_2. The resistivity value of the working fluid sent from the forward path 28A_1 is lowered by the chemical agent in the chemical agent container 28C, and the working fluid with the lowered resistivity value is sent to the return path 28A_2 from the chemical agent container 28C.

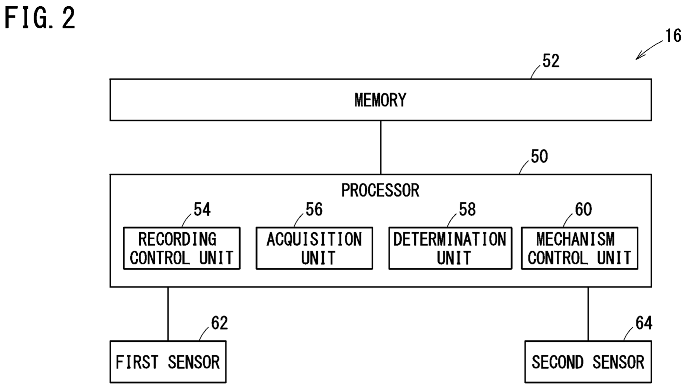

FIG. 2 is a schematic diagram of the controller 16 according to a first embodiment. The controller 16 is a device that controls the adjustment mechanism 28. The controller 16 may be incorporated in a numerical controller that controls the processing machine 12.

The controller 16 includes one or more processors 50 such as a CPU and an MPU, and one or more memories 52 such as a ROM, a RAM, and a hard disk. The controller 16 causes the processor 50 to execute a program stored in the memory 52. When the program is executed, the processor 50 operates as a recording control unit 54, an acquisition unit 56, a determination unit 58, and a mechanism control unit 60. It should be noted that at least one of the recording control unit 54, the acquisition unit 56, the determination unit 58, or the mechanism control unit 60 may be realized by an integrated circuit such as an ASIC or an FPGA. Further, at least one of the recording control unit 54, the acquisition unit 56, the determination unit 58, or the mechanism control unit 60 may be constituted by an electronic circuit including a discrete device.

A first sensor 62 and a second sensor 64 are connected to the controller 16. The first sensor 62 is a sensor that detects a resistivity value of the liquid. The first sensor 62 is installed, for example, inside the clean liquid tank 20 (see FIG. 1). The first sensor 62 may be replaced with a sensor that detects the electrical conductivity of the liquid. The second sensor 64 is a sensor that detects a pressure value that is a value of pressure applied to the filter 24. The second sensor 64 is installed, for example, in a portion of the filtration path 32 that is located between the first pump 22 and the filter 24 (see FIG. 1).

The recording control unit 54 records resistivity data in the memory 52 at predetermined sampling intervals based on signals output from the first sensor 62. Further, the recording control unit 54 records pressure data in the memory 52 at predetermined sampling intervals based on signals output from the second sensor 64. The resistivity data indicates at least a resistivity value detected by the first sensor 62 and a detection time. The pressure data indicates at least a pressure value detected by the second sensor 64 and a detection time.

The acquisition unit 56 periodically acquires a specific resistivity value based on the resistivity data stored in the memory 52. Each time the acquisition unit 56 acquires the resistivity value, the determination unit 58 determines whether or not the resistivity value of the working fluid has increased. The acquisition unit 56 periodically acquires the pressure value based on the pressure data stored in the memory 52. Each time the acquisition unit 56 acquires the pressure value, the determination unit 58 determines whether or not the pressure value applied to the filter 24 has increased. Details of the acquisition unit 56 and the determination unit 58 will be described later.

The mechanism control unit 60 controls the adjustment mechanism 28. In the case where the determination unit 58 determines that both the resistivity value and the pressure value have increased, the mechanism control unit 60 causes the adjustment mechanism 28 to start adjusting the resistivity value of the working fluid. In the case where the adjustment mechanism 28 is constituted by the circulation path 28A, the valve 28B, and the chemical agent container 28C, the mechanism control unit 60 opens the valve 28B. As a result, the adjustment mechanism 28 can adjust the resistivity value of the working fluid.

The timing at which the mechanism control unit 60 causes the adjustment mechanism 28 to end the adjustment is not particularly limited. For example, when a predetermined time has elapsed from when the adjustment mechanism 28 is caused to start the adjustment, the mechanism control unit 60 causes the adjustment mechanism 28 to end the adjustment. In the case where the adjustment mechanism 28 is constituted by the circulation path 28A, the valve 28B, and the chemical agent container 28C, the mechanism control unit 60 closes the valve 28B. As a result, the adjustment mechanism 28 ends the adjustment of the resistivity value of the working fluid.

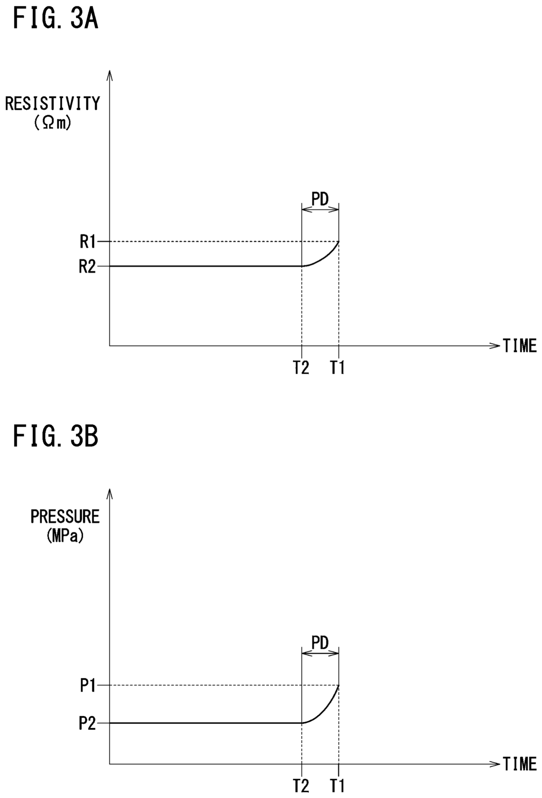

Next, details of the acquisition unit 56 and the determination unit 58 will be described with reference to FIGS. 3A and 3B. FIG. 3A is a graph for explaining the determination of the resistivity value according to the first embodiment. FIG. 3B is a graph for explaining the determination of the pressure value according to the first embodiment.

As shown in FIG. 3A, the acquisition unit 56 acquires the resistivity value for each predetermined period PD based on the resistivity data stored in the memory 52. Each time a current resistivity value R1 is acquired by the acquisition unit 56, the determination unit 58 compares the current resistivity value R1 with a past resistivity value R2. The past resistivity value R2 is a resistivity value detected by the first sensor 62 at a time point T2 that is the predetermined period PD before a current time point T1.

In the case where the current resistivity value R1 exceeds the past resistivity value R2 (R1 > R2), the determination unit 58 determines that the resistivity value has increased. On the other hand, in the case where the current resistivity value R1 is equal to or less than the past resistivity R2 value (R1 ≤ R2), the determination unit 58 determines that the resistivity value has not increased.

As shown FIG. 3B, the acquisition unit 56 acquires the pressure value for each predetermined period PD based on the pressure data stored in the memory 52. Each time a current pressure value P1 is acquired by the acquisition unit 56, the determination unit 58 compares the current pressure value P1 with a past pressure value P2. The past pressure value P2 is a pressure value detected by the second sensor 64 at a time point T2 that is the predetermined period PD before a current time point T1.

In the case where the current pressure value P1 exceeds the past pressure value P2 (P1 > P2), the determination unit 58 determines that the pressure value has increased. On the other hand, in the case where the current pressure value P1 is equal to or less than the past pressure value P2 (P1 ≤ P2), the determination unit 58 determines that the pressure value has not increased.

Note that predetermined period PD in FIG. 3A and the predetermined period PD in FIG. 3B are preferably the same, but may be different from each other. That is, the time point T2 in FIG. 3A and the time point T2 in FIG. 3B may be different from each other.

In this manner, for each predetermined period PD, the determination unit 58 compares the current resistivity value R1 with the past resistivity value R2 and compares the current pressure value P1 with the past pressure value P2. Therefore, the processing load on the processor 50 can be reduced compared to the case of comparing average values or the like.

It should be noted that the determination unit 58 may determine whether or not the resistivity value has increased, based on whether or not a subtraction result (R1 - R2) obtained by subtracting the past resistivity value R2 from the current resistivity value R1 exceeds a predetermined threshold. Similarly, the determination unit 58 may determine whether or not the pressure value has increased, based on whether or not a subtraction result (P1 - P2) obtained by subtracting the past pressure value P2 from the current pressure value P1 exceeds a predetermined threshold.

In the case where whether or not the resistivity value or the pressure value has increased is determined based on whether or not the subtraction result exceeds the predetermined threshold, the influence of noise can be reduced. Further, in the case where the amount of change in the resistivity value or the amount of change in the pressure value is small, the control of the adjustment mechanism 28 by the mechanism control unit 60 can be suppressed. As a result, the processing load on the processor 50 can be reduced.

### [Second Embodiment]

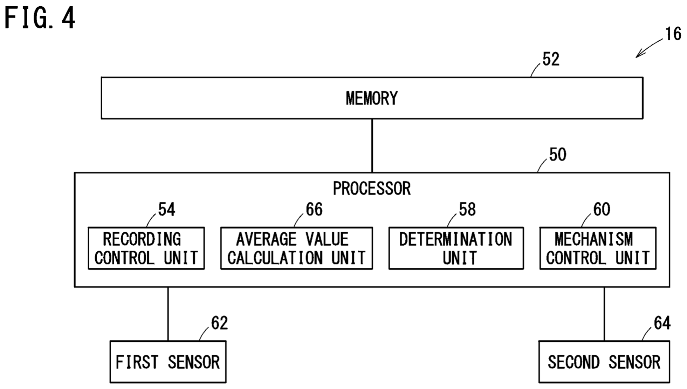

In a second embodiment, the description overlapping with that of the first embodiment will be omitted. FIG. 4 is a schematic diagram of a controller 16 according to the second embodiment. In the second embodiment, the acquisition unit 56 is replaced with an average value calculation unit 66. When the program stored in the memory 52 is executed, the processor 50 operates as the average value calculation unit 66. The average value calculation unit 66 may be realized by an integrated circuit or may be constituted by an electronic circuit including a discrete device.

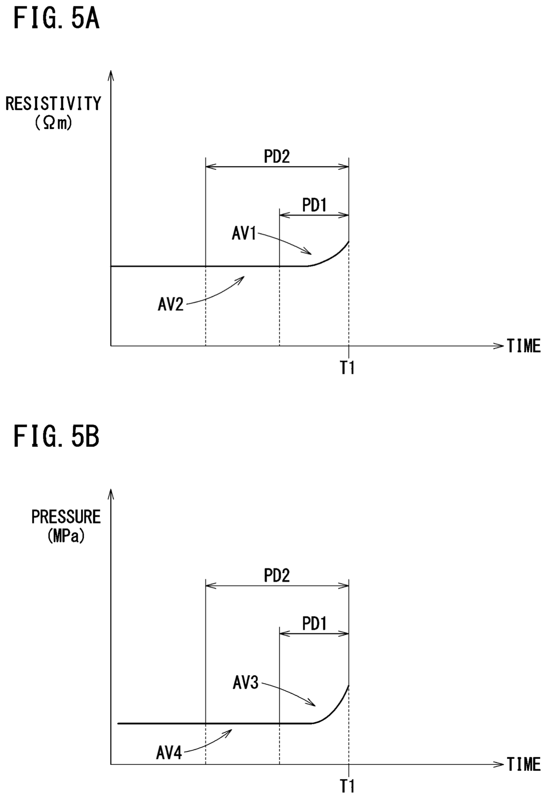

As shown in FIG. 5A, the average value calculation unit 66 periodically calculates a first average value AV1 and a second average value AV2 based on the resistivity data stored in the memory 52. The first average value AV1 is an average value of the resistivity values detected by the first sensor 62 in a first period PD1. The second average value AV2 is an average value of the resistivity values detected by the first sensor 62 in a second period PD2. The start time of the second period PD2 is earlier than the start time of the first period PD1. The length of the second period PD2 is equal to or greater than the length of the first period PD1.

In the present embodiment, the second period PD2 is longer than the first period PD1 and includes the entire first period PD1. In other words, the start time of the second period PD2 is earlier than the start time of the first period PD1, and the end time of the second period PD2 is equal to the end time of the first period PD1.

Note that the second period PD2 may be any period as long as it is longer than the first period PD1. Therefore, the second period PD2 may not include the entire or part of the first period PD1. Further, the end time of the second period PD2 may be earlier than the end time of the first period PD1. In this case, the end time of the second period PD2 may be before the end time of the first period PD1 and after the start time of the first period PD1. Further, the end time of the first period PD1 may be a current time point T1.

Each time the average value calculation unit 66 calculates the first average value AV1 and the second average value AV2, the determination unit 58 compares the first average value AV1 with the second average value AV2. In the case where the first average value AV1 exceeds the second average value AV2 (AV1 > AV2), the determination unit 58 determines that the resistivity value has increased. On the other hand, in the case where the first average value AV1 is equal to or less than the second average value AV2 (AV1 ≤ AV2), the determination unit 58 determines that the resistivity value has not increased.

As shown in FIG. 5B, the average value calculation unit 66 periodically calculates a third average value AV3 and a fourth average value AV4 based on the pressure data stored in the memory 52. The third average value AV3 is an average value of the pressure values detected by the second sensor 64 in a first period PD1. The fourth average value AV4 is an average value of the pressure values detected by the second sensor 64 in a second period PD2.

Each time the average value calculation unit 66 calculates the third average value AV3 and the fourth average value AV4, the determination unit 58 compares the third average value AV3 with the fourth average value AV4. In the case where the third average value AV3 exceeds the fourth average value AV4 (AV3 > AV4), the determination unit 58 determines that the pressure value has increased. On the other hand, in the case where the third average value AV3 is equal to or less than the fourth average value AV4 (AV3 ≤ AV4), the determination unit 58 determines that the pressure value has not increased.

Note that the first period PD1 in FIG. 5A and the first period PD1 in FIG. 5B are preferably the same, but may be different from each other. Similarly, the second period PD2 in FIG. 5A and the second period PD2 in FIG. 5B are preferably the same, but may be different from each other.

In this manner, the determination unit 58 determines whether or not the resistivity value and the pressure value have increased based on the calculation results of the average value calculation unit 66. Therefore, even if an unintended sudden change (disturbance) occurs in at least one of the resistivity value or the pressure value, it is possible to suppress erroneous determination of the determination unit 58.

It should be noted that the determination unit 58 may determine whether or not the resistivity value has increased, based on whether or not a subtraction result (AV1 - AV2) obtained by subtracting the second average value AV2 from the first average value AV1 exceeds a predetermined threshold. Similarly, the determination unit 58 may determine whether or not the pressure value has increased, based on whether or not a subtraction result (AV3 - AV4) obtained by subtracting the fourth average value AV4 from the third average value AV3 exceeds a predetermined threshold.

### [Third Embodiment]

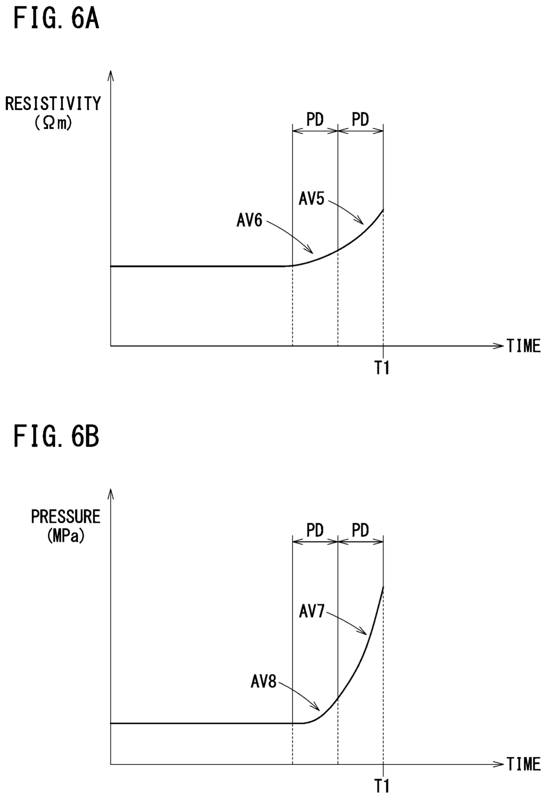

In a third embodiment, the description overlapping with that of the above-described embodiments will be omitted. As shown in FIG. 6A, the average value calculation unit 66 calculates an average resistivity value for each predetermined period PD based on the resistivity data stored in the memory 52. The average resistivity value is an average value of the resistivity values detected by the first sensor 62 in the predetermined period PD. Each time a current average resistivity value AV5 is calculated by the average value calculation unit 66, the determination unit 58 compares the current average resistivity value AV5 with a past average resistivity value AV6.

The current average resistivity value AV5 is an average value of the resistivity values detected by the first sensor 62 in the predetermined period PD (a first period PD1), and corresponds to the first average value AV1. The past average resistivity value AV6 is an average value of the resistivity values detected by the first sensor 62 in the predetermined period PD (a second period PD2) immediately before the period of the current average resistivity value AV5, and corresponds to the second average value AV2. In the case of the present embodiment, the first period PD1 and the second period PD2 do not overlap each other.

The end time of the period of the past average resistivity value AV6 coincides with the start time of the period of the current average resistivity value AV5, but may be earlier than the start time of the period of the current average resistivity value AV5. In other words, the period of the past average resistivity value AV6 and the period of the current average resistivity value AV5 may be temporally separated from each other.

In the case where the current average resistivity value AV5 exceeds the past average resistivity value AV6 (AV5 > AV6), the determination unit 58 determines that the resistivity value has increased. On the other hand, in the case where the current average resistivity value AV5 is equal to or less than the past average resistivity value AV6 (AV5 ≤ AV6), the determination unit 58 determines that the resistivity value has not increased.

As shown in FIG. 6B, the average value calculation unit 66 calculates an average pressure value for each predetermined period PD based on the pressure data stored in the memory 52. The average pressure value is an average value of the pressure values detected by the second sensor 64 in the predetermined period PD. Each time a current average pressure value AV7 is calculated by the average value calculation unit 66, the determination unit 58 compares the current average pressure value AV7 with a past average pressure value AV8.

The current average pressure value AV7 is an average value of the pressure values detected by the second sensor 64 in the predetermined period PD (a first period PD1), and corresponds to the third average value AV3. The past average pressure value AV8 is an average value of the pressure values detected by the second sensor 64 in the predetermined period PD (a second period PD2) immediately before the period of the current average pressure value AV7, and corresponds to the fourth average value AV4.

The end time of the period of the past average pressure value AV8 coincides with the start time of the period of the current average pressure value AV7, but may be earlier than the start time of the period of the current average pressure value AV7. In other words, the period of the past average pressure value AV8 and the period of the current average pressure value AV7 may be temporally separated from each other.

In the case where the current average pressure value AV7 exceeds the past average pressure value AV8 (AV7 > AV8), the determination unit 58 determines that the pressure value has increased. On the other hand, in the case where the current average pressure value AV7 is equal to or less than the past average pressure value AV8 (AV7 ≤ AV8), the determination unit 58 determines that the pressure value has not increased.

In this manner, for each predetermined period PD, the determination unit 58 compares the current average resistivity value AV5 with the past average resistivity value AV6, and compares the current average pressure value AV7 with the past average pressure value AV8. Therefore, even if an unintended sudden change (disturbance) occurs in at least one of the resistivity value or the pressure value, it is possible to suppress erroneous determination of the determination unit 58. Further, the period setting can be simplified as compared to the cases shown in FIGS. 5A and 5B. As a result, the processing load on the processor 50 can be reduced, and mistakes and the like during program production can also be reduced.

It should be noted that the determination unit 58 may determine whether or not the resistivity value has increased, based on whether or not a subtraction result (AV5 - AV6) obtained by subtracting the past average resistivity value AV6 from the current average resistivity value AV5 exceeds a predetermined threshold. Similarly, the determination unit 58 may determine whether or not the pressure value has increased, based on whether or not a subtraction result (AV7 - AV8) obtained by subtracting the past average pressure value AV8 from the current average pressure value AV7 exceeds a predetermined threshold.

### [Fourth Embodiment]

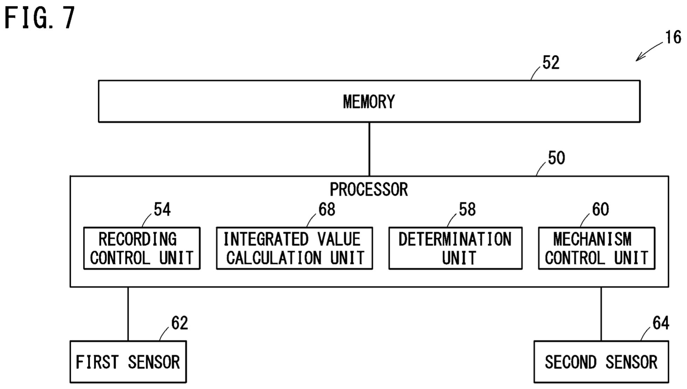

In a fourth embodiment, the description overlapping with that of the above-described embodiments will be omitted. FIG. 7 is a schematic diagram of a controller 16 according to the fourth embodiment. In the fourth embodiment, the average value calculation unit 66 is replaced with an integrated value calculation unit 68. When the program stored in the memory 52 is executed, the processor 50 operates as the integrated value calculation unit 68. The integrated value calculation unit 68 may be realized by an integrated circuit or may be constituted by an electronic circuit including a discrete device.

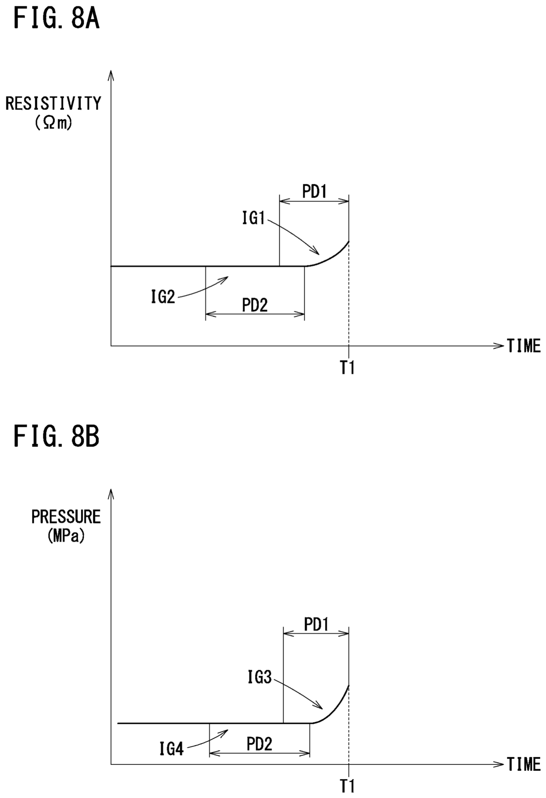

As shown in FIG. 8A, the integrated value calculation unit 68 periodically calculates a first integrated value IG1 and a second integrated value IG2 based on the resistivity data stored in the memory 52. The first integrated value IG1 is an integrated value of the resistivity values detected by the first sensor 62 in a first period PD1. The second integrated value IG2 is an integrated value of the resistivity values detected by the first sensor 62 in a second period PD2. The start time of the second period PD2 is earlier than the start time of the first period PD1. The length of the second period PD2 is equal to or greater than the length of the first period PD1.

In the present embodiment, the second period PD2 is longer than the first period PD1 and includes part of the first period PD1. In other words, the second period PD2 does not include the entire first period PD1. However, the second period PD2 may not include part of the first period PD1. Note that the end time of the first period PD1 may be a current time point T1.

Each time the integrated value calculation unit 68 calculates the first integrated value IG1 and the second integrated value IG2, the determination unit 58 compares the first integrated value IG1 with the second integrated value IG2. In the case where the first integrated value IG1 exceeds the second integrated value IG2 (IG1 > IG2), the determination unit 58 determines that the resistivity value has increased. On the other hand, in the case where the first integrated value IG1 is equal to or less than the second integrated value IG2 (IG1 ≤ IG2), the determination unit 58 determines that the resistivity value has not increased.

As shown in FIG. 8B, the integrated value calculation unit 68 periodically calculates a third integrated value IG3 and a fourth integrated value IG4 based on the pressure data stored in the memory 52. The third integrated value IG3 is an integrated value of the pressure values detected by the second sensor 64 in a first period PD1. The fourth integrated value IG4 is an integrated value of the pressure values detected by the second sensor 64 in a second period PD2.

Each time the integrated value calculation unit 68 calculates the third integrated value IG3 and the fourth integrated value IG4, the determination unit 58 compares the third integrated value IG3 with the fourth integrated value IG4. In the case where the third integrated value IG3 exceeds the fourth integrated value IG4 (IG3 > IG4), the determination unit 58 determines that the pressure value has increased. On the other hand, in the case where the third integrated value IG3 is equal to or less than the fourth integrated value IG4 (IG3 ≤ IG4), the determination unit 58 determines that the pressure value has not increased.

In this manner, the determination unit 58 determines whether or not the resistivity value and the pressure value have increased based on the calculation results of the integrated value calculation unit 68. Accordingly, the trend of the actual detected values can be grasped. As a result, the increase in the resistivity value and the pressure value can be determined precisely compared to the case of using the average value or the like.

It should be noted that the determination unit 58 may determine whether or not the resistivity value has increased, based on whether or not a subtraction result (IG1 - IG2) obtained by subtracting the second integrated value IG2 from the first integrated value IG1 exceeds a predetermined threshold. Similarly, the determination unit 58 may determine whether or not the pressure value has increased, based on whether or not a subtraction result (IG3 - IG4) obtained by subtracting the fourth integrated value IG4 from the third integrated value IG3 exceeds a predetermined threshold.

Further, in the present embodiment, the integrated value calculation unit 68 may calculate an approximate line that approximates the change in the resistivity value detected by the first sensor 62 in the first period PD1, and calculate the integrated value of the resistivity values on the approximate line as the first integrated value IG1. In the same manner as above, the integrated value calculation unit 68 can calculate the second integrated value IG2, the third integrated value IG3, and the fourth integrated value IG4. Consequently, it is possible to suppress erroneous determination of the determination unit 58 due to disturbance, as compared to the case where the actual detected values are simply integrated.

Note that the method of calculating the approximate line is not particularly limited. For example, linear approximation, exponential approximation, logarithmic approximation, polynomial approximation, power approximation, moving average, or the like can be applied to the calculation of the approximate line. The calculated approximate line may be expanded in series.

### [Fifth Embodiment]

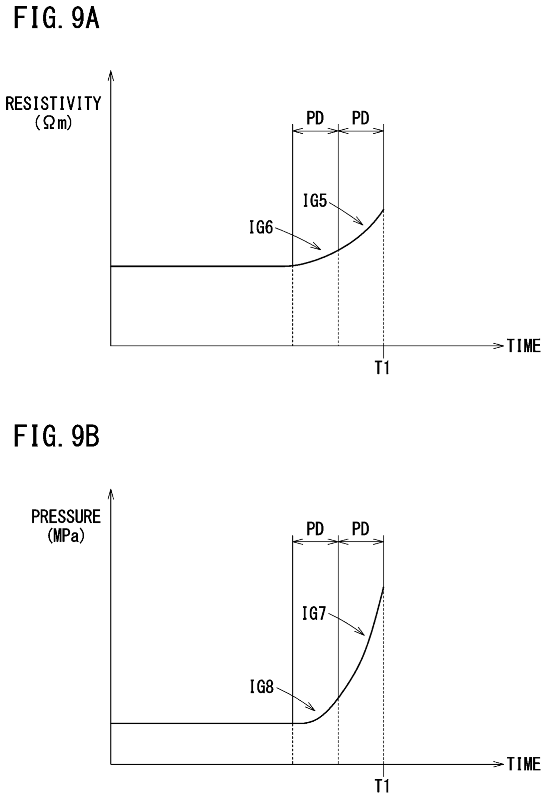

In a fifth embodiment, the description overlapping with that of the above-described embodiments will be omitted. As shown in FIG. 9A, the integrated value calculation unit 68 calculates a resistivity integrated value for each predetermined period PD based on the resistivity data stored in the memory 52. The resistivity integrated value is an integrated value of the resistivity values detected by the first sensor 62 in the predetermined period PD. Each time a current resistivity integrated value IG5 is calculated by the integrated value calculation unit 68, the determination unit 58 compares the current resistivity integrated value IG5 with a past resistivity integrated value IG6.

The current resistivity integrated value IG5 is an integrated value of the resistivity values detected by the first sensor 62 in the predetermined period PD (a first period PD1), and corresponds to the first integrated value IG1. The past resistivity integrated value IG6 is an integrated value of the resistivity values detected by the first sensor 62 in the predetermined period PD (a second period PD2) immediately before the period of the current resistivity integrated value IG5, and corresponds to the second integrated value IG2. Note that, in the case of the present embodiment, the first period PD1 and the second period PD2 do not overlap each other.

The end time of the period of the past resistivity integrated value IG6 coincides with the start time of the period of the current resistivity integrated value IG5, but may be earlier than the start time of the period of the current resistivity integrated value IG5. In other words, the period of the past resistivity integrated value IG6 and the period of the current resistivity integrated value IG5 may be temporally separated from each other.

In the case where the current resistivity integrated value IG5 exceeds the past resistivity integrated value IG6 (IG5 > IG6), the determination unit 58 determines that the resistivity has increased. On the other hand, in the case where the current resistivity integrated value IG5 is equal to or less than the past resistivity integrated value IG6 (IG5 ≤ IG6), the determination unit 58 determines that the resistivity has not increased.

As shown in FIG. 9B, the integrated value calculation unit 68 calculates a pressure integrated value for each predetermined period PD based on the pressure data stored in the memory 52. The pressure integrated value is an integrated value of the pressure values detected by the second sensor 64 in the predetermined period PD. Each time a current pressure integrated value IG7 is calculated by the integrated value calculation unit 68, the determination unit 58 compares the current pressure integrated value IG7 with a past pressure integrated value IG8.

The current pressure integrated value IG7 is an integrated value of the pressure values detected by the second sensor 64 in the predetermined period PD (a first period PD1), and corresponds to the third integrated value IG3. The past pressure integrated value IG8 is an integrated value of the pressure values detected by the second sensor 64 in the predetermined period PD (a second period PD2) immediately before the period of the current pressure integrated value IG7, and corresponds to the fourth integrated value IG4.

The end time of the period of the past pressure integrated value IG8 coincides with the start time of the period of the current pressure integrated value IG7, but may be earlier than the start time of the period of the current pressure integrated value IG7. In other words, the period of the past pressure integrated value IG8 and the period of the current pressure integrated value IG7 may be temporally separated from each other.

In the case where the current pressure integrated value IG7 exceeds the past pressure integrated value IG8 (IG7 > IG8), the determination unit 58 determines that the pressure value has increased. On the other hand, in the case where the current pressure integrated value IG7 is equal to or less than the past pressure integrated value IG8 (IG7 ≤ IG8), the determination unit 58 determines that the pressure value has not increased.

In this manner, for each predetermined period PD, the determination unit 58 compares the current resistivity integrated value IG5 with the past resistivity integrated value IG6 and compares the current pressure integrated value IG7 with the past pressure integrated value IG8. Therefore, even if an unintended sudden change (disturbance) occurs in at least one of the resistivity value or the pressure value, it is possible to suppress erroneous determination of the determination unit 58. Further, the period setting can be simplified as compared to the cases shown in FIGS. 8A and 8B. As a result, the processing load on the processor 50 can be reduced, and mistakes and the like during program production can also be reduced.

It should be noted that the determination unit 58 may determine whether or not the resistivity value has increased, based on whether or not a subtraction result (IG5 - IG6) obtained by subtracting the past resistivity integrated value IG6 from the current resistivity integrated value IG5 exceeds a predetermined threshold. Similarly, the determination unit 58 may determine whether or not the pressure value has increased, based on whether or not a subtraction result (IG7 - IG8) obtained by subtracting the past pressure integrated value IG8 from the current pressure integrated value IG7 exceeds a predetermined threshold.

Further, in the present embodiment, the integrated value calculation unit 68 may calculate an approximate line that approximates the change in the resistivity value detected by the first sensor 62 in the first period PD1, and calculate the integrated value of the resistivity values on the approximate line as the current resistivity integrated value IG5. In the same manner as above, the integrated value calculation unit 68 can calculate the past resistivity integrated value IG6, the current pressure integrated value IG7, and the past pressure integrated value IG8.

### [Modified Embodiment]

The above embodiments may be modified as follows.

### (Modification 1)

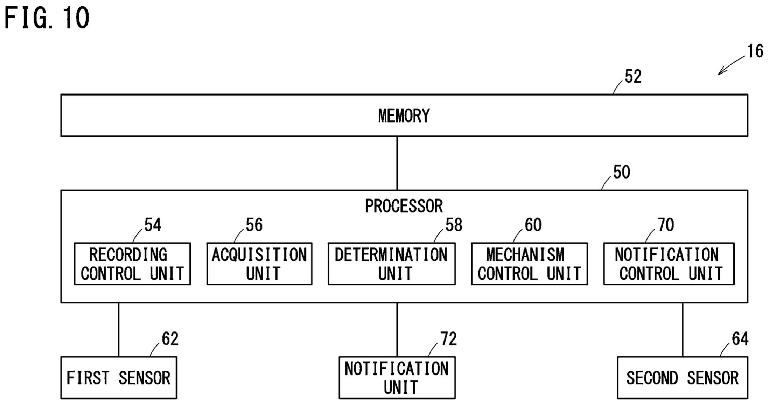

FIG. 10 is a schematic diagram of a controller 16 according to a first modification. In the present modification, a notification control unit 70 is provided in the controller 16 of the first embodiment. The notification control unit 70 may be provided in the controller 16 of the second embodiment or may be provided in the controller 16 of the third embodiment. Alternatively, the notification control unit 70 may be provided in the controller 16 of the fourth embodiment or may be provided in the controller 16 of the fifth embodiment.

In the present modification, when the program stored in the memory 52 is executed, the processor 50 operates as the notification control unit 70. The notification control unit 70 may be realized by an integrated circuit or may be constituted by an electronic circuit including a discrete device.

In the case where the determination unit 58 determines that both the resistivity value and the pressure value have increased, the notification control unit 70 controls a notification unit 72 to issue a warning. For example, the notification control unit 70 controls the notification unit 72 to notify a user of a warning message. The notification unit 72 includes at least one of a display unit, a speaker, or a light emitting unit. The notification unit 72 may be provided in the controller 16 or may be provided outside the controller 16, such as the processing machine 12.

By providing the notification control unit 70 in this manner, it is possible to prompt the user to perform maintenance or the like of the adjustment mechanism 28.

### (Modification 2)

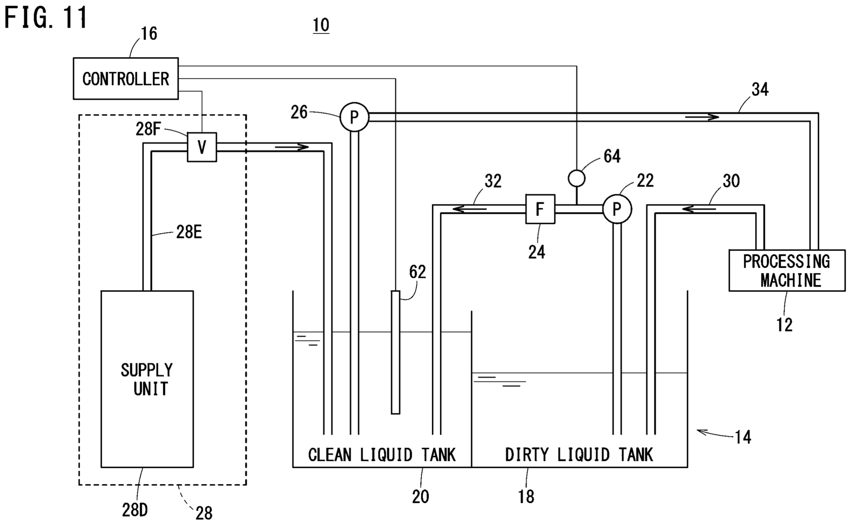

FIG. 11 is a schematic diagram of a processing system 10 according to a second modification. In the present modification, the configuration of the adjustment mechanism 28 is different from that of the above embodiments. In the present modification, the adjustment mechanism 28 supplies a chemical agent for lowering the resistivity value or tap water to the clean liquid tank 20. For example, the adjustment mechanism 28 can be constituted by a supply unit 28D that supplies the chemical agent or the tap water, a communication path 28E that allows communication between the supply unit 28D and the clean liquid tank 20, and a valve 28F.

It should be noted that the adjustment mechanism 28 may include the supply unit 28D, the communication path 28E, and the valve 28F in addition to the circulating path 28A, the valve 28B, and the chemical agent container 28C.

### (Modification 3)

The processing system 10 is not limited to the above embodiments. For example, the adjustment mechanism 28 may adjust the resistivity value of the dirty liquid stored in the dirty liquid tank 18. Alternatively, the chemical agent container 28C may be replaced with an ion exchange resin for lowering the resistivity value of the working fluid. In addition, the filter 24 may be impregnated with a chemical agent for lowering the resistivity value.

Alternatively, the determination unit 58 may determine only whether or not the resistivity value of the working fluid has increased. In this case, in the case where the determination unit 58 determines that the resistivity value has increased, the mechanism control unit 60 causes the adjustment mechanism 28 to start adjusting the resistivity value of the working fluid. Note that the second sensor 64 may not be provided.

### [Operational Effect]

It has been confirmed by the experiments of the present inventors that the life of the filter 24 is shortened when the resistivity value of the working fluid is relatively high. As described above, in the case where the determination unit 58 determines that at least the resistivity value detected by the first sensor 62 has increased, the mechanism control unit 60 causes the adjustment mechanism 28 to adjust the resistivity value of the working fluid. By so doing, the resistivity value of the working fluid can be lowered, and as a result, the life of the filter 24 can be extended. Further, the degree of adjustment of the resistivity value of the working fluid by the adjustment mechanism 28 can be confirmed based on the resistivity values detected by the first sensor 62.

It should be noted that, in the case where the determination unit 58 determines that the resistivity value detected by the first sensor 62 and the pressure value detected by the second sensor 64 have both increased, the mechanism control unit 60 may cause the adjustment mechanism 28 to adjust the resistivity value of the working fluid. In this case, the length of the life of the filter 24 can be precisely grasped by the two indices (the resistivity value and the pressure value) that are correlated with the life of the filter 24.

The life of the filter for the processing machine in the case where machining is performed on a metal workpiece made of an aluminum-based material is 10% to 25% of the life of the filter for the processing machine in the case where machining is performed on a metal workpiece made of an iron-based material. Therefore, in the case where the metal workpiece is made of an aluminum-based material, it is particularly useful to lower the resistivity value of the liquid using the adjustment mechanism 28.

The following supplementary notes are further disclosed in relation to the above-described embodiments.

### (Supplementary Note 1)

The present disclosure is characterized by the liquid filtration device (14) equipped with: the dirty liquid tank (18) configured to store a dirty liquid that is a liquid containing metal chips generated by machining of the metal workpiece; the filter (24) configured to filter the dirty liquid; and the clean liquid tank (20) configured to store a clean liquid that is the liquid that has passed through the filter, the liquid filtration device including: the adjustment mechanism (28) configured to adjust the resistivity value of the liquid; the first sensor (62) configured to detect the resistivity value of the liquid; the determination unit (58) configured to determine whether or not the resistivity value has increased, based on the resistivity value detected by the first sensor; and the mechanism control unit (60) configured to cause the adjustment mechanism to adjust the resistivity value of the liquid in the case where the resistivity value is determined to have increased.

### (Supplementary Note 2)

In the liquid filtration device according to Supplementary Note 1, the adjustment mechanism may lower the resistivity value of the liquid.

### (Supplementary Note 3)

In the liquid filtration device according to Supplementary Note 2, the adjustment mechanism may supply the chemical agent for lowering the resistivity value or tap water to the liquid, or may cause the liquid to pass through the container in which the chemical agent for lowering the resistivity value is accommodated.

### (Supplementary Note 4)

The liquid filtration device according to any one of Supplementary Notes 1 to 3 may further include the notification control unit (70) configured to control the notification unit (72) to issue a warning in the case where the resistivity value is determined to have increased.

### (Supplementary Note 5)

In the liquid filtration device according to any one of Supplementary Notes 1 to 4, in the case where the current resistivity value (R1) exceeds the past resistivity value (R2) detected a predetermined period before, the determination unit may determine that the resistivity value has increased.

### (Supplementary Note 6)

The liquid filtration device according to any one of Supplementary Notes 1 to 4 may further include the average value calculation unit (66) configured to calculate the first average value (AV1) that is an average value of the resistivity values detected in the first period (PD1), and the second average value (AV2) that is an average value of the resistivity values detected in the second period (PD2), wherein the start time of the second period may be earlier than the start time of the first period, the length of the second period may be equal to or greater than the length of the first period, and in the case where the first average value exceeds the second average value, the determination unit may determine that the resistivity value has increased.

### (Supplementary Note 7)

In the liquid filtration device according to Supplementary Note 6, the second period may include at least part of the first period.

### (Supplementary Note 8)

In the liquid filtration device according to Supplementary Note 6, the start time of the first period and the end time of the second period may be the same.

### (Supplementary Note 9)

The liquid filtration device according to any one of Supplementary Notes 1 to 4 may further include the integrated value calculation unit (68) configured to calculate the first integrated value (IG1) that is an integrated value of the resistivity values detected in the first period and the second integrated value (IG2) that is an integrated value of the resistivity values detected in the second period, wherein the end time of the second period may be earlier than the end time of the first period, the length of the second period may be equal to or greater than the length of the first period, and in the case where the first integrated value exceeds the second integrated value, the determination unit may determine that the resistivity value has increased.

### (Supplementary Note 10)

In the liquid filtration device according to Supplementary Note 9, the second period may include part of the first period.

### (Supplementary Note 11)

In the liquid filtration device according to Supplementary Note 9, the start time of the first period and the end time of the second period may be the same.

### (Supplementary Note 12)

The liquid filtration device according to any one of Supplementary Notes 1 to 11 may further include the second sensor (64) configured to detect the pressure value that is a value of pressure applied to the filter, wherein in the case where both the resistivity value and the pressure value are determined to have increased, the mechanism control unit may cause the adjustment mechanism to adjust the resistivity value of the liquid.

### (Supplementary Note 13)

In the liquid filtration device according to any one of Supplementary Notes 1 to 12, the metal workpiece may be made of an aluminum-based material.

### (Supplementary Note 14)

The present disclosure is characterized by the processing system (10) including the liquid filtration device according to any one of Supplementary Notes 1 to 13, and the processing machine (12) configured to machine the metal workpiece.

Although the present disclosure has been described in detail, the present disclosure is not limited to the above-described individual embodiments. Various additions, replacements, modifications, partial deletions, and the like can be made to these embodiments without departing from the essence and gist of the present disclosure, or without departing from the essence and gist of the present disclosure derived from the claims and equivalents thereof. Further, these embodiments can also be implemented in combination. For example, in the above-described embodiments, the order of operations and the order of processes are shown as examples, and are not limited to these. Furthermore, the same applies to a case where numerical values or mathematical expressions are used in the description of the above-described embodiments.

### REFERENCE SIGNS LIST

10: processing system
12: processing machine
14: liquid filtration device
16: controller
18: dirty liquid tank
20: clean liquid tank
24: filter
28: adjustment mechanism
54: recording control unit
56: acquisition unit
58: determination unit
60: mechanism control unit
62: first sensor
64: second sensor
66: average value calculation unit
68: integrated value calculation unit
70: notification control unit
72: notification unit

## Claims

1. A liquid filtration device, comprising:
a dirty liquid tank configured to store a dirty liquid that is a liquid containing metal chips generated by machining of a metal workpiece;
a filter configured to filter the dirty liquid;
a clean liquid tank configured to store a clean liquid that is the liquid that has passed through the filter;
an adjustment mechanism configured to adjust a resistivity value of the liquid;
a first sensor configured to detect the resistivity value of the liquid;
a determination unit configured to determine whether or not the resistivity value has increased, based on the resistivity value detected by the first sensor; and
a mechanism control unit configured to cause the adjustment mechanism to adjust the resistivity value of the liquid in a case where the resistivity value is determined to have increased.

2. The liquid filtration device according to claim 1, wherein
the adjustment mechanism lowers the resistivity value of the liquid.

3. The liquid filtration device according to claim 2, wherein
the adjustment mechanism supplies a chemical agent for lowering the resistivity value or tap water to the liquid, or causes the liquid to pass through a container in which the chemical agent for lowering the resistivity value is accommodated.

4. The liquid filtration device according to any one of claims 1 to 3, further comprising
a notification control unit configured to control a notification unit to issue a warning in the case where the resistivity value is determined to have increased.

5. The liquid filtration device according to any one of claims 1 to 4, wherein
in a case where a current resistivity value that is the resistivity value detected currently exceeds a past resistivity value that is the resistivity value detected a predetermined period before, the determination unit determines that the resistivity value has increased.

6. The liquid filtration device according to any one of claims 1 to 4, further comprising
an average value calculation unit configured to calculate a first average value that is an average value of the resistivity values detected in a first period, and a second average value that is an average value of the resistivity values detected in a second period, wherein
a start time of the second period is earlier than a start time of the first period,
a length of the second period is equal to or greater than a length of the first period, and
in a case where the first average value exceeds the second average value, the determination unit determines that the resistivity value has increased.

7. The liquid filtration device according to claim 6, wherein
the second period includes at least part of the first period.

8. The liquid filtration device according to claim 6, wherein
the start time of the first period and an end time of the second period are same.

9. The liquid filtration device according to any one of claims 1 to 4, further comprising
an integrated value calculation unit configured to calculate a first integrated value that is an integrated value of the resistivity values detected in a first period, and a second integrated value that is an integrated value of the resistivity values detected in a second period, wherein
an end time of the second period is earlier than an end time of the first period,
a length of the second period is equal to or greater than a length of the first period, and
in a case where the first integrated value exceeds the second integrated value, the determination unit determines that the resistivity value has increased.

10. The liquid filtration device according to claim 9, wherein
the second period includes part of the first period.

11. The liquid filtration device according to claim 9, wherein
a start time of the first period and the end time of the second period are same.

12. The liquid filtration device according to any one of claims 1 to 11, further comprising
a second sensor configured to detect a pressure value that is a value of pressure applied to the filter, wherein
in a case where both the resistivity value and the pressure value are determined to have increased, the mechanism control unit causes the adjustment mechanism to adjust the resistivity value of the liquid.

13. The liquid filtration device according to any one of claims 1 to 12, wherein
the metal workpiece is made of an aluminum-based material.

14. A processing system comprising:
the liquid filtration device according to any one of claims 1 to 13; and
a processing machine configured to machine the metal workpiece.
